# EUROPÄISCHE PATENTSCHRIFT

(11) **EP 0 612 647 B1**
(45) Veröffentlichungstag und Bekanntmachung des Hinweises auf die Patenterteilung: **14.05.1997**
(21) Anmeldenummer: 94890033.7
(22) Anmeldetag: 08.02.1994
(51) Int. Cl.: B61D 15/06, B61D 17/06, B61F 1/10, B62D 21/15

(54) **Einrichtung zum Schutz für Passagiere gegen Verletzungen bei einem Zusammenstoss von Eisenbahnzügen**
Device for protection for passengers from injuries during a collision of railway trains
Dispositif de protection pour passagers contre des blessures pendant une collision des trains ferroviaires

(30) Priorität: 24.02.1993 AT 358/93
(43) Veröffentlichungstag der Anmeldung: 31.08.1994
(73) Patentinhaber: Siemens SGP Verkehrstechnik GmbH, 1110 Wien (AT)
(72) Erfinder: Moser, Gerhard, Dipl.-Ing., A-2380 Perchtoldsdorf (AT); Mayer, Wilhelm, Dipl.-Ing., A-1180 Wien (AT)
(74) Vertreter: Peham, Alois

(56) Entgegenhaltungen:
- DE-A- 2 222 885
- FR-A- 2 140 937
- FR-A- 2 414 429
- US-A- 2 468 591

## Beschreibung

Die Erfindung betrifft einen Eisenbahnwagen nach dem Oberbegriff des Patentanspruches 1.

Beim Aufprall eines fahrenden Zuges auf eine stehende Zugsgarnitur oder beim Zusammenstoß zweier fahrender Eisenbahnzüge bilden die Puffer einen nur ungenügenden Schutz für die im Waggon sitzenden Passagiere, insbesondere im Bereich der Stoßstelle.

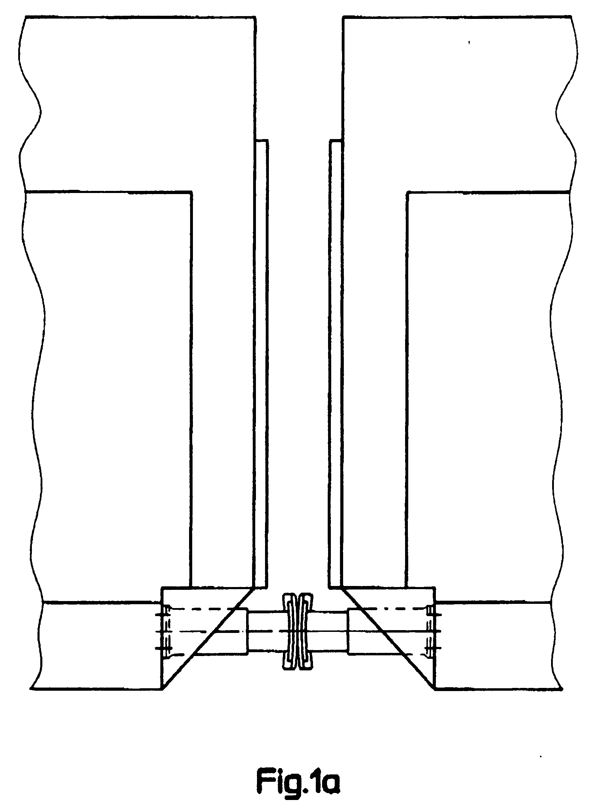

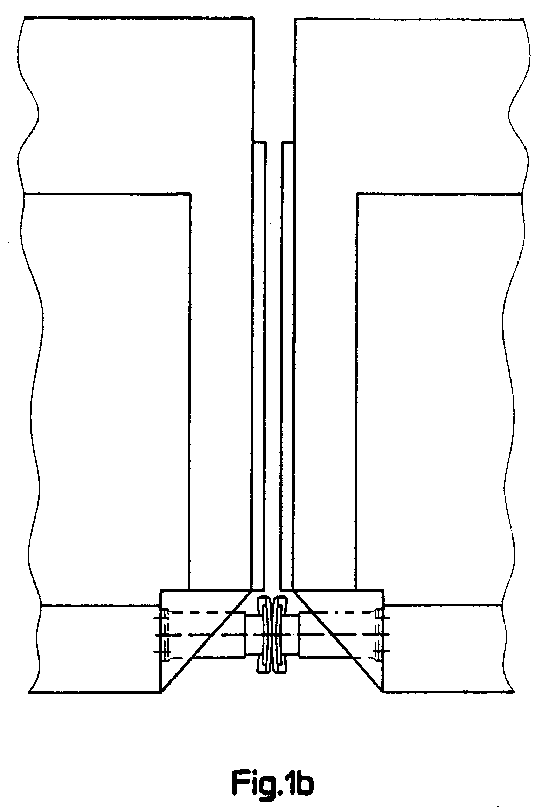

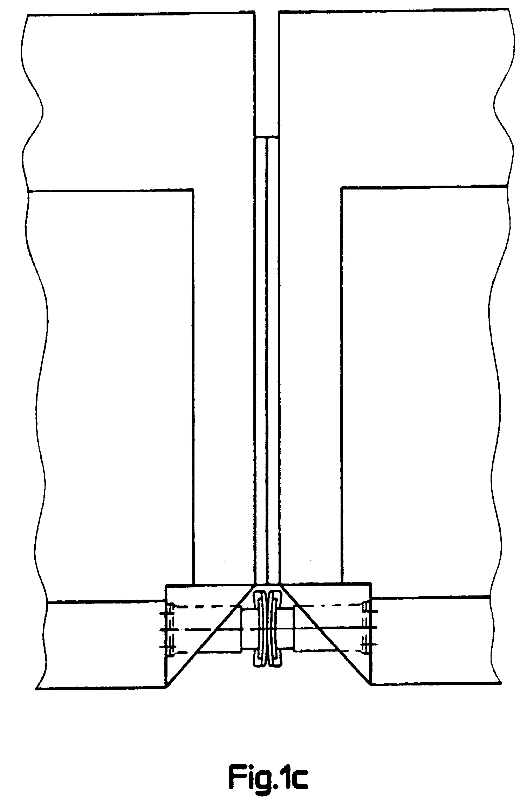

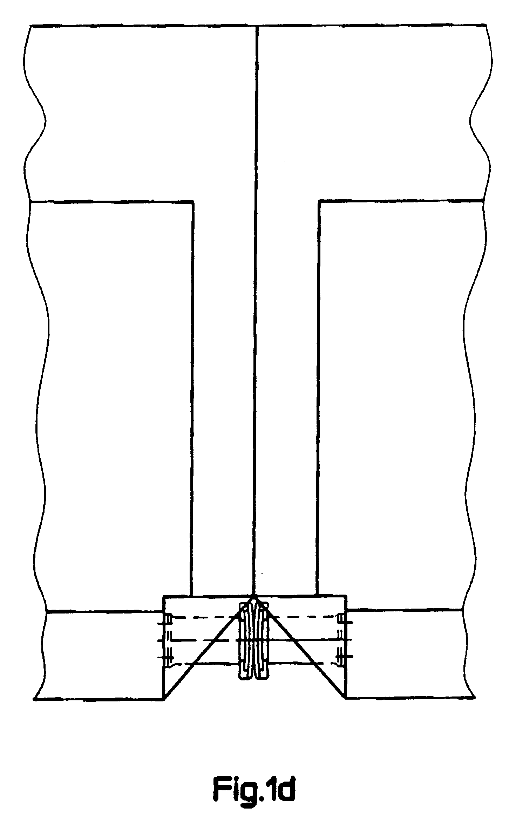

In den Fig. 1a bis 1d ist der Ablauf einer Kollision schematisch dargestellt, wobei Fig. 1a den Normalzustand der Puffer bei gekuppelten Wagen zeigt, bei denen sich die Puffer berühren. Bei einer Kollision verformen sich die Puffer vorerst elastisch bis an die Grenze und werden hiebei auf eine Länge von etwa 110 mm eingefedert. Die Waggons nähern sich, wie in Fig. 1b dargestellt. Danach werden die Puffer auf weiteren etwa 45 mm in der Fahrtrichtung plastisch deformiert, wobei sich die äußersten Wagenumrisse der benachbarten Waggons, wie Fig. 1b darstellt, berühren. Danach wird das Untergestell elastisch voll beansprucht, sodaß sich die Stirnwände, wie Fig. 1d zeigt, berühren und sodann verformen, worauf die plastische Verformung des Untergestells eintritt. Damit beginnt die Gefahr, welche von der Verletzung bis zur Tötung der Passagiere reichen kann.

Aus der "Zeitschrift für Eisenbahnwesen und Verkehrstechnik - Glaser's Annalen", 116. Jahrgang, Nr. 8/9 ist es bekannt, bei Eisenbahnwagen an den beiden Enden je einen Bereich vorzusehen, welcher sich im Kollisionsfall deformiert (Knautschzone), wobei der mittlere Bereich des Wagenkastens (Fahrgastabteil) möglichst unbeschädigt erhalten bleiben soll.

Die DD-PS 200 207 zeigt einen Untergestellvorbau von Schienenfahrzeugen, insbesondere Reisezugwagen, bei dem an einem Wagenende quer zur Fahrtrichtung ein Kopfstückträger, ein Einstiegquerträger und ein Hauptquerträger angeordnet sind. In Fahrzeuglängsrichtung sind an beiden Seiten Langträger angeordnet, welche im Einstiegbereich als Einstiegstreben eingerückt sind.

In der DE-PS 613 728 wird ein Unterrahmen beschrieben, welcher zwischen zwei Langträgern eine größere Anzahl an Querträgern aufweist. Die Anordnung von mindestens zwei in der Fahrtrichtung aufeinanderfolgender, sich quer zur Fahrtrichtung erstreckender steifer Träger ist bei Schienenfahrzeugen somit bekannt.

Die DE-OS 2 045 277 zeigt die Verwendung von Trapezblechen bzw. Wellblechen im Fußbodenbereich.

Aus der ER-PS 2 259 154 geht ein Kopfträger hervor, welcher in der Draufsicht im wesentlichen Dreiecksform besitzt und mit abgeflachtem, gegen die Wagenmitte zu gerichtetem Ende ausgeführt ist, wobei die stirnseitige Länge zumindest den Abstand der Puffer überbrückt. Der Kopfträger trägt zudem die Puffer. Der zweite steife Träger ist kongruent zum ersten Träger (Kopfträger) ausgeführt, wobei die dem Kopfträger zugekehrten Wände des zweiten Trägers parallel zu den gegenüberliegenden Wänden des Kopfträgers verlaufen. Bei allen bekannten Konstruktionen ist der Schutz der Passagiere ungenügend.

Letzteres ist auch beim Chassiskopf gemäß der FR-PS 2 140 937 der Fall, wo zur Energievernichtung bei Zusammenstößen zwischen einem Kopfquerträger, einem der Wagenmitte näherliegenden Lastverteilungsträger und zwei Längsträgern ein gewelltes Blech eingesetzt ist. In der Längsmitte des Wagens ist eine Aufnahme für die Kupplung vorgesehen, welche einen relativ steifen Teil darstellt. Dadurch ist diese bekannte Konstruktionsweise, bei der eigentlich zwei durch einen steifen Bereich getrennte, nebeneinanderliegende Deformationszonen gebildet sind, nur für kleine Kräfte geeignet, wobei dieser Nachteil noch durch den versteifenden Einfluß der seitlichen Längsträger verstärkt zum Tragen kommt.

Aufgabe der Erfindung ist die Schaffung von Maßnahmen, durch welche die Gefahr für die Passagiere, bei einem Zusammenstoß von Eisenbahnzügen verletzt oder getötet zu werden, beseitigt oder zumindest weitgehend herabgesetzt werden soll.

Diese Aufgabe wird erfindungsgemäß durch die Maßnahme nach dem kennzeichnenden Teil des Patentanspruches 1 gelöst.

Die Verformungszone kommt bei der erfindungsgemäßen Konstruktion vollständig hinter die Kupplung bzw. die Mittelpufferkupplung zu liegen, sodaß im Notfall eine einwandfreie und ungehinderte Verformung des für die energievernichtende Deformierung vorgesehenen Bereiches gewährleistet und größtmögliche Sicherheit für die Passagiere auch bei großen auftretenden Kräften gegeben ist.

Weitere Vorteile und zweckmäßige Ausgestaltungen ergeben sich aus den Merkmalen der Unteransprüche.

Die Erfindung wird anhand der Zeichnungen näher erläutert. Es zeigen
Fig. 2 eine Draufsicht eines Untergestelles,
Fig. 3 eine Variante des Untergestelles nach Fig. 2,
Fig. 4 einen Schnitt nach der Linie IV-IV der Fig. 2,
Fig. 5 einen Schnitt nach der Linie V-V der Fig. 2,

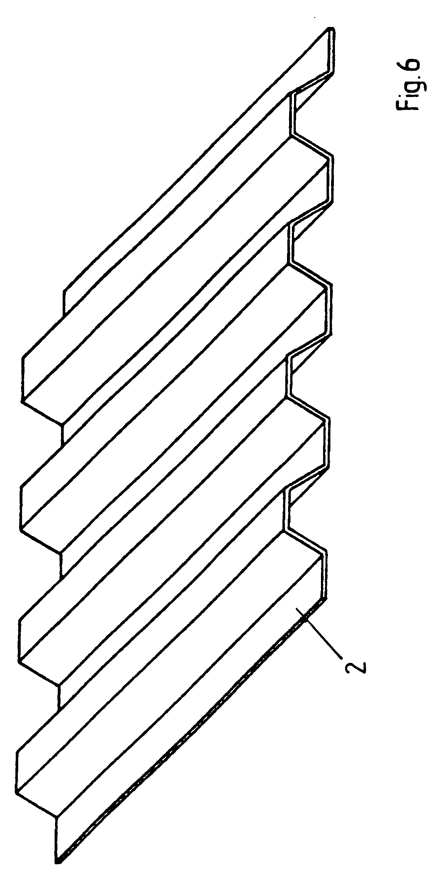

Fig. 6 einen Teil eines Deformationselementes in schaubildlicher Darstellung,
Fig. 7 einen Schnitt nach der Linie VII-VII der Fig. 2,
Fig. 8 die erfindungsgemäße Schutzvorkehrung der Seitenwände von der Seite her,
Fig. 9 den linken Teil der Stirnwand in Frontansicht,
Fig. 10 die Stirnwand des Waggons in schaubildlicher Darstellung und vereinfachter Ausführung,
Fig. 11 einen Schnitt durch die Schutzabdeckung im rechten Teil der Konstruktion nach Fig. 10,
Fig. 12 eine Ausführungsform eines dämpfenden Elementes und
Fig. 13 eine schaubildliche Ausführungsform der stirnseitigen Profile des Kastenrahmens.

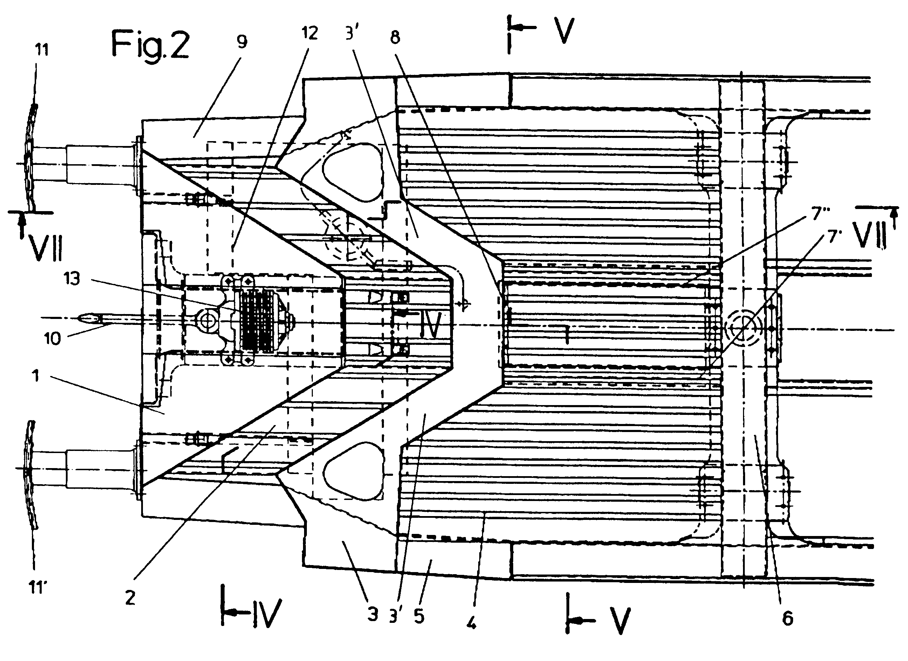

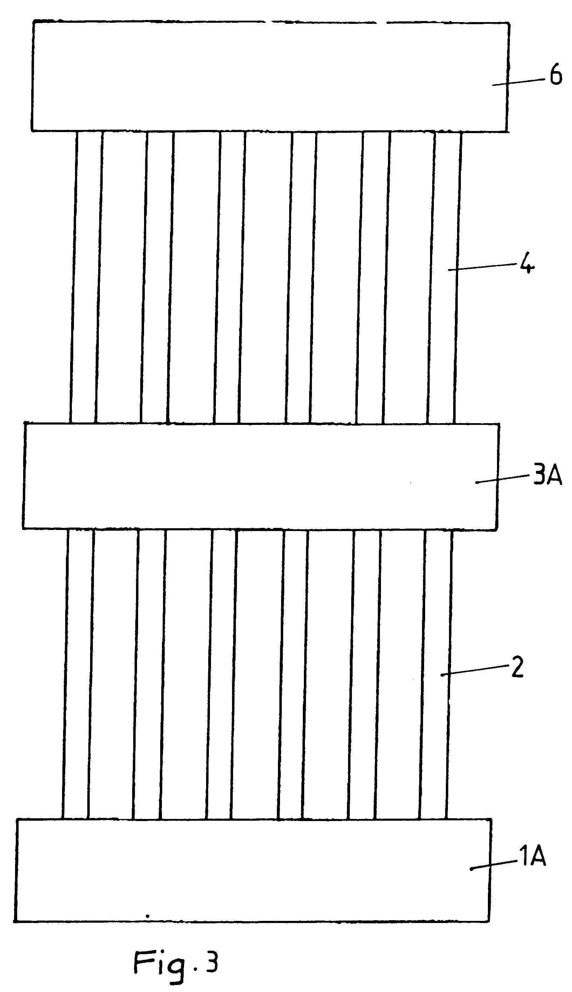

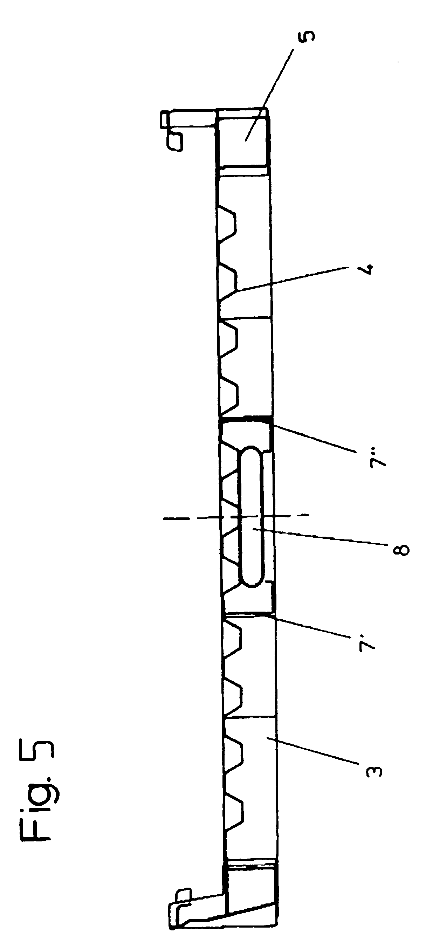

Das in Fig. 2 dargestellte Untergestell des Waggonkastens besitzt einen sehr steifen Kupplungsträger 1, an dem eine Mittelpufferkupplung, oder, wie im vorliegenden Fall, ein Zughaken 10 sowie Seitenpuffer 11, 11' befestigt sind. Der Kupplungsträger besitzt die Form eines zur Längsmittelachse spiegelbildlichen Dreieckes mit zur Waggonmitte hin zugekehrten abgeflachten Spitze, in welchen das Federelement 13 für den Zughaken gelagert ist. Im Anschluß an den Kupplungsträger 1 ist ein Deformationselement 2 vorgesehen, welches plastisch verformbar ist und aus einem Trapezblech oder Wellblech besteht, welches in den Fig. 3 und 5 dargestellt ist. Die Wellentäler und die Wellenberge erstrecken sich parallel zueinander in der Längsrichtung des Wagenkastens, d.h. in der Fahrtrichtung. Im Anschluß an das Deformationselement 2, welches sich bei einem Zusammenstoß als erster Teil des Untergestells verformen soll, befindet sich ein steifer Querträger 3, welcher mit dem Querträger 1 kongruente Form aufweist, d.h. daß er Schenkel besitzt, deren Wände mit den gegenüberliegenden Wänden des Kupplungsträgers 1 parallel verlaufen. Außerdem verläuft auch der Mittelsteg dieses Trägers 3 parallel zum abgeflachten Ende des Trägers 1, sodaß sich der Träger 1 beim Zusammenstoß und Zusammendrücken des Deformationselementes 2 in den Träger 3 einschieben kann. Die Schenkel des Zwischenträgers 3 sind mit 3' bezeichnet.

Im Anschluß an den Zwischenträger 3 befindet sich ein zweites Deformationselement 4, welches so ausgebildet ist, daß es sich während der plastischen Deformation des ersten Deformationselementes 2 elastisch und im Anschluß daran plastisch verformt. Dadurch wird erreicht, daß das Fahrzeug von der Stirnseite ausgehend Energie aufnimmt und sich zusammenschiebt, sodaß der Passagierraum weitgehend geschützt wird. Das zweite Deformationselement 4 ist ähnlich wie das erste Deformationselement 2 aus Wellblech ausgeführt, dessen Wellen ebenso wie beim ersten Deformationselement, d.h. die Wellentäler und die Wellenberge in der Längsrichtung des Fahrzeugkastens verlaufen. Das zweite Deformationselement stützt sich an seinem der Wagenmitte zugekehrten Ende an einem Hauptträger 6 des Untergestelles ab, welches seitlich durch Längsträger begrenzt ist, in welchen ein kastenförmiges Trägerstück 5 vorgesehen ist, das bei einer Verformung des Deformationselementes 4 zusammengedrückt werden kann und das Ausmaß der Deformation des Deformationselementes 4 begrenzt.

Die seitlichen Enden des Deformationselementes 2 befinden sich im Einstiegbereich und können jeweils, wie Fig. 3 zeigt, in eine Trittstufe 9 übergehen. An den Einstiegbereich schließt in Fahrtrichtung gesehen, der WC-Bereich, worauf erst der Passagierbereich beginnt. Während bei den bekannten Fahrzeugen dieser vordere Bereich bei einem Eisenbahnzusammenstoß unversehrt bleibt, erleidet bei der erfindungsgemäßen Konstruktion vorerst der vordere Bereich Schaden, worauf erst die Stoßenergie im wesentlich gedämpften Zustand, wenn überhaupt, auf den Passagierbereich übergeht. Der Passagierbereich beginnt vorzugsweise erst im Bereich des Hauptträgers 6 des Wagenkastens, sodaß die Deformation im Bereich des Passagierteiles beginnt. Der als Kastenträger 5 ausgebildete Teil des Längsträgers kann sich vorzugsweise vom Mittelträger 3 bis zum Hauptträger 6 erstrecken. Dadurch ist eine ziehharmonikaartige Verformung des Waggonteiles im Bereich der Deformationselemente 2 und 4 ermöglicht.

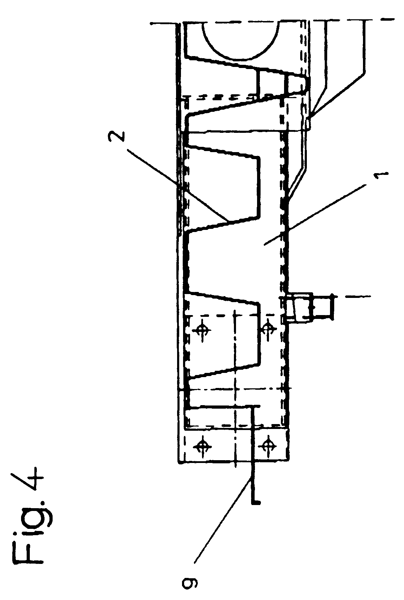

Das Deformationselement 4 weist zwischen dem Mittelträger 3 und dem Hauptträger 6 einen sich in der Fahrzeuglängsmittelachse erstreckenden Versteifungsträger 7, welcher, wie Fig. 4 zeigt, aus zwei in Abstand voneinander angeordneten, vorzugsweise einander zugekehrten C-Trägern 7', 7'' besteht, zwischen denen sich ein für die Elektrik vorgesehener Kabelkanal befindet, der in eine in Fig. 4 dargestellte Durchbrechung 8 des Quersteges des Zwischenträgers 3 mündet. Fig. 4 zeigt die endseitigen Längsträger, zwischen denen das als Wellblech ausgebildete Deformationselement 4 eingespannt ist, dessen Höhe kleiner als die Höhe des Deformationselementes bzw. Wellbleches 2 ist. Die Höhe und Dicke des Wellbleches ist so gewählt, daß sich die eingangs erwähnte Eigenschaft der Deformationselemente, d.h. sich im Vorderteil plastisch zu verformen, während das hintere Deformationselement nur eine elastische und sodann eine plastische Verformung erfährt, ergibt. Diese Eigenschaften sind rechnerisch zu ermitteln.

Erfindungsgemäß ist es vorteilhaft, wenn drei hintereinander angeordnete Träger 1, 3, 6 vorgesehen sind, zwischen denen sich Deformationselemente 2, 4 befinden. Wesentlich ist, daß der Träger 1 ein stabiles Kopfstück ist. Im Rahmen der Erfindung ist es auch möglich, daß der Hauptträger 6 ähnlich wie die beiden Träger 1 und 3, eine kongruente Form mit den beiden Trägern oder mit dem Träger 3, falls dieser andere Form als der Träger 1 aufweist, besitzt, um das Ineinanderschieben des einen Trägers in den benachbarten Träger zu ermöglichen. Im Zwischenträger 3 können auch Teile der Handbremse geführt werden.

Die für das Untergestell vorgesehene Konstruktion kann nur für dieses oder auch für den Dachteil oder sowohl für das Untergestell als auch für den Dachteil des Waggons vorgesehen sein. Auch beim Dachteil ist es vorteilhaft, an den Enden ein steifes Kopfstück vorzusehen, welches von einem Deformationselement gefolgt ist, an das ein steifer Träger anschließt, der unter Zwischenschaltung eines zweiten Deformationselementes von einem weiteren steifen Träger gefolgt ist.

Die Verkabelung erstreckt sich nach Eintritt in den Zwischenträger 3 entlang mindestens eines der beiden Schrägarme 3', worauf sie aus dem Zwischenträger nach oben austritt. In gleicher Weise können in diesem Träger, z.B. die für die Wasserzu- und abfuhr, für die Abfuhr der Abwasser usw. bestimmte Rohre, Bremselemente od. dgl. untergebracht sein.

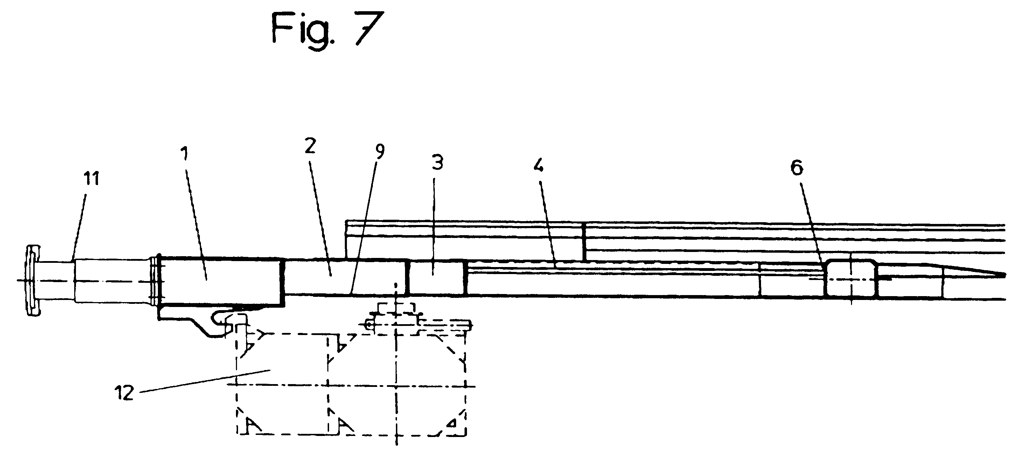

Wie Fig. 7 zeigt, kann ein Fäkalientank 12 am Kopfstück 1 und am Verformungsteil 2 aufgehängt sein. Die Trittstufe ist mit 9 bezeichnet.

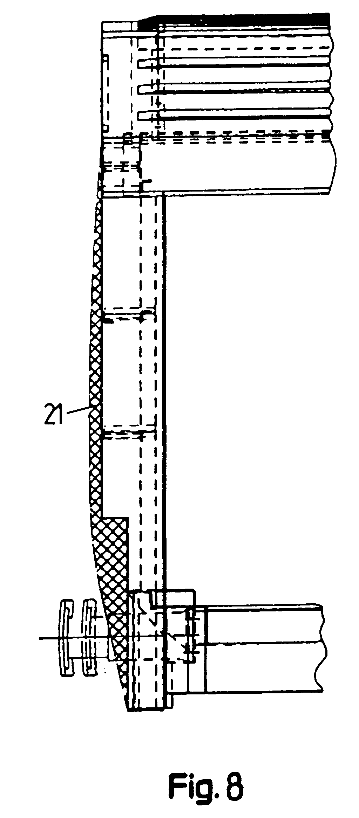

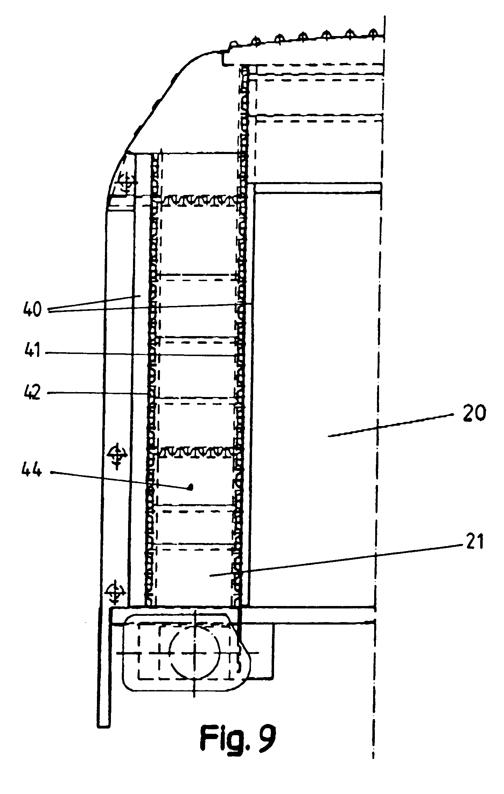

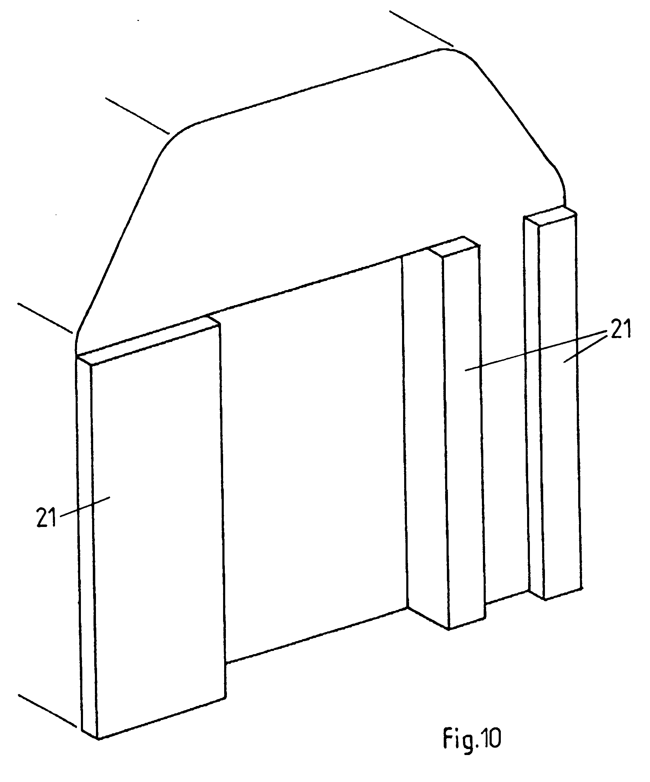

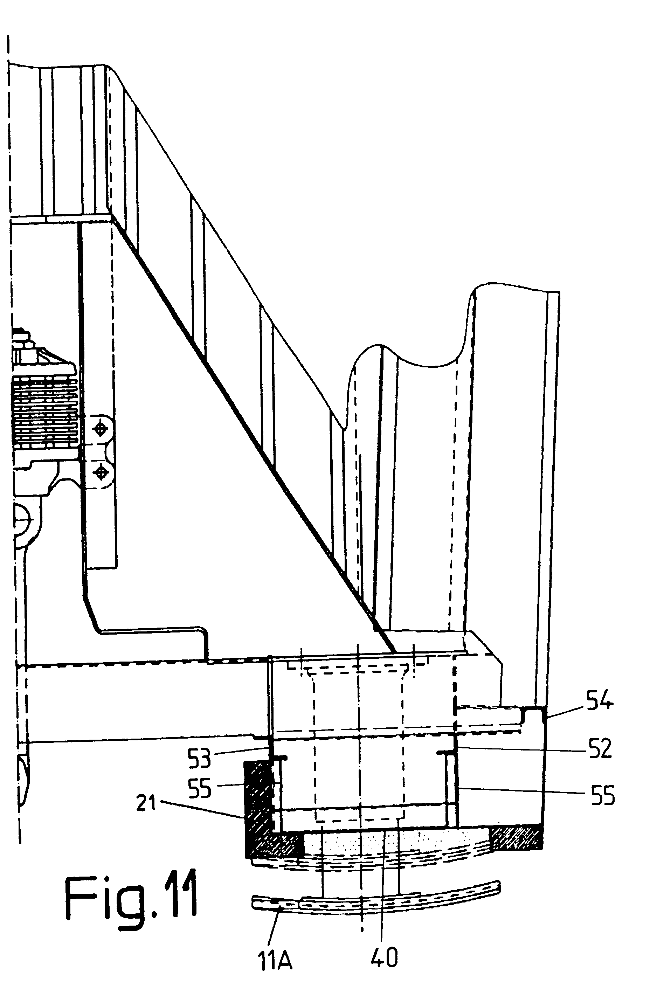

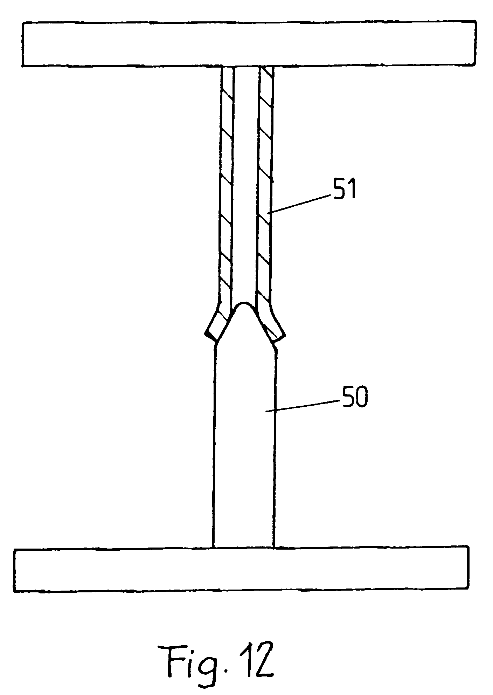

Im Rahmen der Erfindung können auch Vorkehrungen zum Schutz der Stirnwände vorgesehen sein. In Fig. 8 ist ein solches Deformationselement mit einer Kreuz- und Querschraffur angedeutet, wobei in Fig. 9 mit 20 der Durchgang und mit 21 der Schutzteil bezeichnet ist. Die Schutzteile der benachbarten Wagenenden stoßen bei einer Kollision aufeinander. Die Schutzauflage kann, wie in Fig. 10 im linken Teil dargestellt ist, die Stirnwand zur Gänze, oder, wie aus dem rechten Teil sowie in Fig. 11 ersichtlich, nur die beiden Ränder bedecken, wobei der Schutzteil 21 aus einem elastischen Material bestehen kann, welches sich nach Verformung wieder regenerieren kann. Zwischen diesem Teil und der Stirnwand kann auch ein dämpfendes Element vorgesehen sein. Bei der Ausführungsform nach Fig. 12 ist zur Bildung eines solchen dämpfenden Elementes auf der einen Seite, z.B. auf der Schutzwand, ein Dorn 50 und auf der gegenüberliegenden Seite ein rohrförmiger Bolzen 51 vorgesehen, in welchen der Dorn 50 eingreift und bei Stoßeinwirkung den Bolzen 51 aufweitet. Anstelle eines solchen Dornes 50 und des rohrförmigen Bolzens 51 kann ein Topf vorgesehen sein, welcher am Ende eines Gewindebolzens aufsitzt und bei einem Stoß die aufeinanderfolgenden Gewindegänge oder Ringteile deformiert oder abbricht. Vorzugsweise sind diese Verformungselemente im oberen Teil der Schutzform vorhanden, was den Vorteil hat, daß die Dämpfung des Stoßes, falls der Dachbereich nicht so wie der Bodenbereich ausgeführt ist, auch im Dachbereich erfolgt, wodurch eine gezielte Übertragung der Stoßenergie in den Oberrahmen und Dachbereich erfolgen kann.

Bei einer Schutzabdeckung, wie sie Fig. 10 im rechten Teil darstellt, ist es zweckmäßig, daß die Pufferteller 11A, wie der Fig. 11 zu entnehmen ist, den Abstand zwischen den randseitigen Schutzteilen 21 überbrückt.

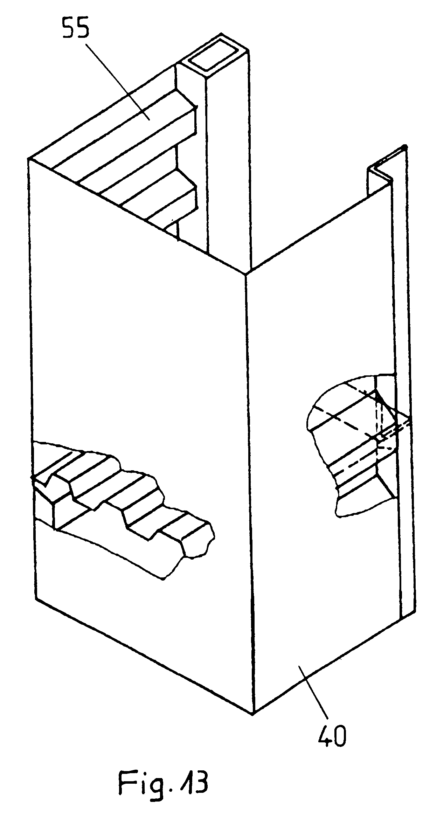

Wie der Fig. 11 zu entnehmen ist, können die stirnseitigen lotrechten Seitenwände so ausgeführt sein, daß an der Stirnseite des Kastenrahmens randseitig lotrechte Winkel-(52), Z- (53) oder U-Profile (54), vorgesehen sind, die steif sind und zusätzlich noch in Höhenabständen durch weitere Profile versteift sein können. Die lotrechten Profile sind mit 40 bezeichnet. Zwischen diesen in Querabstand voneinander befindlichen Profilen 40 und einer stirnseitigen Wand 44 sind Wellbleche 41, 42 vorgesehen, welche ähnlich wie die Dämpfungselemente 2 und 4 ausgebildet sind und in der Fahrtrichtung verlaufen. Diese Wellbleche nehmen bei einer Kollision des Schienenfahrzeuges die Stöße in erster Linie auf. Bei der in Fig. 13 dargestellten Konstruktion der Profile 40 sind an der Innenseite derselben ähnliche Wellblechkonstruktionen, die mit 55 bezeichnet sind, vorgesehen.

Selbstverständlich können im Rahmen der Erfindung verschiedene konstruktive Abänderungen vorgenommen werden, ohne den Rahmen der Erfindung zu verlassen. So kann die Form der Schutzteile an den Stirnwänden der Eintritte auch anders ausgeführt werden, wesentlich ist lediglich, daß der Stoß zuerst vom Endteil des Waggons aufgenommen wird und der Waggon vom Ende beginnend verformt wird, sodaß der Passagierteil erst den Ausklang der Stoßenergie, wenn überhaupt, zu spüren bekommt. Das Deformationselement kann natürlich jedes beliebige stoßverzerrende Element sein.

## Patentansprüche

1. Eisenbahnwagen mit je einem an den beiden Enden vorgesehenem Bereich, welcher sich im Kollisionsfall deformiert, wobei der mittlere Bereich des Wagenkastens möglichst unbeschädigt erhalten bleibt, wobei der Kasten des Schienenfahrzeuges an seinen beiden Enden untergestellseitig und/oder dachseitig in an sich bekannter Weise mindestens einen steifen, sich quer zur Fahrtrichtung erstreckenden Träger (1) und im Anschluß daran mindestens ein Deformationselement (2) aufweist, dadurch gekennzeichnet, daß der steife, sich quer zur Fahrtrichtung erstreckende Träger (1) im wesentlichen in der Draufsicht Dreiecksform besitzt und im Anschluß an das Deformationselement (2) ein zweiter steifer Träger (3) kongruent zum ersten Träger (1) ausgeführt ist.

2. Eisenbahnwagen nach Anspruch 1, dadurch gekennzeichnet, daß der erste steife Träger (1) mit abgeflachtem gegen die Wagenmitte zu gerichteten Ende ausgeführt ist und das Deformationselement (2) kongruent zwischen den beiden Trägern (1, 2) verläuft.

3. Eisenbahnwagen nach Anspruch 1, dadurch gekennzeichnet, daß in der Fahrtrichtung gesehen im Anschluß an den zweiten Träger (3) ein weiteres Deformationselement (4) vorgesehen ist, welches sich an seinem dem Träger (3) abgekehrten Ende an einem weiteren Träger (6) abstützt, welcher zwischen randseitigen Trägern eingespannt ist und im Bereiche des Anfanges des Passagierbereiches verläuft, und wobei das in Fahrtrichtung gesehene erste Deformationselement (2) plastisch verformbar ist und das zweite Deformationselement (4) während der plastischen Verformung des ersten Deformationselementes (2) elastisch und hierauf plastisch verformbar ist.

4. Eisenbahnwagen nach Anspruch 3, dadurch gekennzeichnet, daß die Höhe des plastisch deformierbaren Deformationselementes (2) größer als die Höhe des weiteren elastisch und plastisch deformierbaren Deformationselementes (4) ist.

5. Eisenbahnwagen nach Anspruch 3 oder 4, dadurch gekennzeichnet, daß das erste, plastisch verformbare Deformationselement (2) mindestens an einem seitlichen Ende bis zum Einstiegbereich des Schienenfahrzeuges reicht und sein Ende vorzugsweise in ein Trittbrett (9) übergeht.

6. Eisenbahnwagen nach einem der Ansprüche 3 bis 5, dadurch gekennzeichnet, daß der erste steife Träger (1) beim Untergestell die Puffer (11, 11') sowie die Mittelpufferkupplung bzw. den Zughaken (10) trägt, wobei die dem ersten steifen Träger (1) zugekehrten Wände des zweiten Trägers (3) parallel zu den gegenüberliegenden Wänden des ersten steifen Trägers (1) verlaufen.

7. Eisenbahnwagen nach mindestens einem der vorangehenden Ansprüche, dadurch gekennzeichnet, daß mindestens ein Teil mindestens eines der beiden seitlichen Träger als verformbare, vorzugsweise kastenförmige, Träger (5) ausgebildet ist.

8. Eisenbahnwagen nach mindestens einem der vorangehenden Ansprüche, dadurch gekennzeichnet, daß zwischen dem steifen Träger (3) und dem Querträger (6) im Bereiche des Deformationselementes (4) ein Kanal zur Führung der Elektrokabel und/oder anderer Leitungen vorgesehen ist, welcher in eine Durchbrechung (8) des zweiten Trägers mündet und die Leitungen Bremsteile, Rohrleitungen für Wasser, Abwasser und andere im zweiten Träger (3) bzw. in dessen schrägen Armen geführt sind.

## Claims

1. Railway carriage, having a region provided at each end which becomes deformed in the event of a collision, the middle region of the carriage body remaining undamaged as far as possible, the body of the rail vehicle having at least one rigid support (1) extending transversely to the direction of travel at both its ends on the underframe side and/or on the roof side in a manner known per se and, adjoining the said support, at least one deformation element (2), characterized in that the rigid support (1) extending transversely to the direction of travel essentially has a triangular shape in the plan view and, adjoining the deformation element (2), a second rigid support (3) is designed to be congruent with the first support (1).

2. Railway carriage according to Claim 1, characterized in that the first rigid support (1) is designed with a flattened end which is directed towards the middle of the carriage, and the deformation element (2) runs congruently between the two supports (1, 2).

3. Railway carriage according to Claim 1, characterized in that a further deformation element (4) is provided adjoining the second support (3), viewed in the direction of travel, which is supported at its end remote from the support (3) on a further support (6) which is braced between edge supports and runs in the region of the beginning of the passenger region, and the first deformation element (2), viewed in the direction of travel, is plastically deformable and the second deformation element (4) is elastically and then plastically deformable during the plastic deformation of the first deformation element (2).

4. Railway carriage according to Claim 3, characterized in that the height of the plastically deformable deformation element (2) is greater than the height of the further elastically and plastically deformable deformation element (4).

5. Railway carriage according to Claim 3 or 4, characterized in that the first, plastically deformable deformation element (2) extends at least at one lateral end up to the access region of the rail vehicle, and its end preferably merges into a tread plate (9).

6. Railway carriage according to one of Claims 3 to 5, characterized in that the first rigid support (1) bears the buffers (11, 11') on the underframe and the central buffer coupling or the coupling hook (10), the walls of the second support (3) facing the first rigid support (1) running parallel to the opposite walls of the first rigid support (1).

7. Railway carriage according to at least one of the preceding claims, characterized in that at least one part of at least one of the two lateral supports is designed as a deformable, preferably box-shaped, support (5).

8. Railway carriage according to at least one of the preceding claims, characterized in that a duct for guiding the electric cables and/or other lines is provided between the rigid support (3) and the crossmember (6) in the region of the deformation element (4), which duct opens out into a passage (8) in the second support, and the lines, brake parts, pipes for water, waste water and others are routed in the second support (3) or in its sloping arms.

## Revendications

1. Voiture ferroviaire comportant une zone à chacune de ses deux extrémités, qui se déforme en cas de collision, la zone centrale de la caisse de la voiture restant alors le plus possible non-endommagée, la caisse du véhicule sur rail comportant à ses deux extrémités du côté du châssis et/ou du côté du toit de manière connue en soi, au moins un support (1) rigide s'étendant transversalement à la direction du trajet et, raccordé à celui-ci, au moins un élément (2) de déformation, caractérisée en ce que le support (1) rigide s'étendant transversalement à la direction du trajet a, vu de dessus, sensiblement la forme d'un triangle et un deuxième support rigide (3) est réalisé, en raccordement à l'élément (2) de déformation, de manière congruente par rapport au premier support (1).

2. Voiture ferroviaire suivant la revendication 1, caractérisée en ce que le premier support rigide (1) est réalisé avec une extrémité aplatie contre le centre de la voiture vers l'extrémité dirigée et l'élément (2) de déformation s'étend de manière congruente entre les deux supports (1, 2).

3. Véhicule ferroviaire suivant la revendication 1, caractérisé en ce qu'il est prévu, en raccordement avec le second support (3), vu dans la direction du trajet, un autre élément (4) de déformation, qui s'appuie par son extrémité éloignée du support (3) sur un autre support (6), lequel est serré entre des supports marginaux et s'étend dans la zone du début de la zone pour passagers, le premier élément (2) de déformation, vu dans la direction du trajet, peut être déformé de manière plastique et le second élément (4) de déformation peut être déformé de manière élastique et après cela de manière plastique, pendant que le premier élément (2) de déformation se déforme de manière plastique.

4. Voiture ferroviaire suivant la revendication 3, caractérisée en ce que la hauteur de l'élément (2) de déformation pouvant être déformé plastiquement est plus grande que la hauteur de l'autre élément (4) de déformation pouvant être déformé élastiquement et plastiquement.

5. Voiture ferroviaire suivant la revendication 3 ou 4, caractérisée en ce que le premier élément (2) de déformation pouvant être déformé de manière plastique s'étend, au moins à son extrémité latérale, jusqu'à la zone de montée du véhicule sur rails et son extrémité se prolonge de préférence en un marche-pieds (9).

6. Voiture ferroviaire suivant l'une des revendications 3 à 5, caractérisée en ce que le premier support rigide (1) porte dans le châssis les tampons (11, 11') ainsi que l'attelage à tampon central et le crochet de traction (10), les parois du second support (3) qui sont tournées vers le premier support (1) rigide s'étendant parallèlement aux parois opposées du premier support rigide (1).

7. Voiture ferroviaire suivant au moins l'une des revendications précédentes, caractérisée en ce qu'au moins une partie d'au moins l'un des deux supports latéraux est sous forme de support (5) déformable, de préférence en forme de caisse.

8. Voiture ferroviaire suivant au moins l'une des revendications précédentes, caractérisée en ce qu'il est prévu entre le support rigide (3) et le support transversal (6) dans la zone de l'élément (4) de déformation un canal pour le guidage des câbles électriques et/ou d'autres conduites, lequel câble débouche dans une découpure (8) du second support et les conduites pour pièces de freinage, des conduites tubulaires pour de l'eau, des eaux usées et autres passent dans le second support (3) ou dans ses bras en oblique.
